# EUROPEAN PATENT APPLICATION

(11) **EP 4 502 654 A1**
(43) Date of publication of application: **05.02.2025**
(21) Application number: 23780241.8
(22) Date of filing: 24.03.2023
(51) Int. Cl.: G01S 13/89, G01S 13/56

(54) **OCCUPANT DETECTION DEVICE AND PROGRAM**

(30) Priority: 31.03.2022 JP 2022059991
(71) Applicant: AISIN CORPORATION, Kariya-shi, Aichi 448-8650 (JP)
(72) Inventor: OGASAWARA, Yuma, Kariya-shi, Aichi 448-8650 (JP); FUWA, Ryohei, Kariya-shi, Aichi 444-0027 (JP)
(74) Representative: TBK
(86) International application number: PCT/JP2023/011977
(87) International publication number: WO 2023/190231

(57) **Abstract**

A problem of an embodiment of the present invention is to provide an occupant detection device that can highly accurately detect the presence or absence of an occupant regardless of the occupant's location or posture. An occupant detection device (1) which is one embodiment of the present invention includes an obtaining part (321) that obtains reflected-wave information indicating intensities of reflected waves generated by transmission waves being reflected by objects, the transmission waves being transmitted into an interior (vehicle interior R) of a mobile unit (vehicle C); a generating part (322) that generates, based on the reflected-wave information, a piece of first point cloud information (511) indicating changes in intensity of corresponding ones of the reflected waves in a first detection region (DR2, DR3) set for each seat row (S2, S3) including a plurality of seating regions (SR); and a determining part (323) that determines, for each of the seat rows (S2, S3), whether or not an occupant is present in a corresponding one of the first detection regions (DR2, DR3), based on a corresponding one of the pieces of first point cloud information (511), when driving of the mobile unit (vehicle C) is stopped. The pieces of first point cloud information (511) each include information indicating a point cloud corresponding to an object (P2B) present across a plurality of seating regions (SR) in a corresponding one of the first detection regions (DR2, DR3).

## Description

### TECHNICAL FIELD

An embodiment of the present invention relates to an occupant detection device and a program.

### BACKGROUND ART

An occupant detection device has been used that detects an occupant present in a vehicle interior, based on reflected waves that are generated by electromagnetic waves, which are transmitted into the vehicle interior, etc., being reflected by objects. Results of the detection by such an occupant detection device are used, for example, in a system that detects leaving behind of an occupant, etc., after a vehicle is stopped.

### CITATIONS LIST

### PATENT LITERATURE

Patent Literature 1: JP 2019-168379 A

### SUMMARY OF INVENTION

### TECHNICAL PROBLEMS

In the conventional occupant detection device, since a detection region is set for each seating location, there is a possibility that an occupant present across a plurality of seating locations may not be able to be accurately detected.

Hence, a problem of an embodiment of the present invention is to provide an occupant detection device and a program that are capable of highly accurately detecting the presence or absence of an occupant regardless of the occupant's location or posture.

### SOLUTIONS TO PROBLEMS

An occupant detection device which is one embodiment of the present invention includes: an obtaining part that obtains reflected-wave information indicating intensities of reflected waves generated by transmission waves being reflected by objects, the transmission waves being transmitted into an interior of a mobile unit; a generating part that generates, based on the reflected-wave information, a piece of first point cloud information indicating changes in intensity of corresponding ones of the reflected waves in a first detection region set for each seat row including a plurality of seating regions; and a determining part that determines, for each of the seat rows, whether or not an occupant is present in a corresponding one of the first detection regions, based on a corresponding one of the pieces of first point cloud information, when driving of the mobile unit is stopped, and the pieces of first point cloud information each include information indicating a point cloud corresponding to an object present across the plurality of seating regions in a corresponding one of the first detection regions.

According to the above-described configuration, detection of an occupant at the time of the mobile unit being stopped is performed based on the first detection region set for each seat row. By this, the presence or absence of an occupant at the time of being stopped can be highly accurately detected regardless of the occupant's location or posture.

In addition, in the above-described configuration, the generating part may generate the first point cloud information including a number of plots indicating a number of unit regions in which an amount of change per unit time in intensity of the reflected wave is greater than or equal to a first threshold value among a plurality of unit regions that mark off the first detection region, and the determining part may determine that an occupant is present, when the number of plots is greater than or equal to a second threshold value.

According to the above-described configuration, motion unique to a human being such as pulsation can be accurately detected, and thus, the presence or absence of an occupant can be highly accurately detected.

In addition, in the above-described configuration, the second detection region may be set for each of the seating regions.

According to the above-described configuration, at the time of being driven, an occupant can be detected for each seating region.

In addition, in the above-described configuration, at a time of being driven, the generating part may generate second point cloud information indicating changes in intensity of corresponding ones of the reflected waves in a second detection region different from the first detection regions, the time of being driven including a time of traveling or a time of being temporarily stopped, and being other than when driving of the mobile unit is stopped, and the determining part may determine, based on the second point cloud information, whether or not an occupant is present at the time of the mobile unit being driven.

According to the above-described configuration, detection of an occupant at the time of the mobile unit being driven is performed based on the second detection regions different from the first detection regions. By this, both a function used at the time of being stopped (e.g., a leaving-behind prevention function) and a function used at the time of being driven (e.g., an occupant monitoring function) can be highly accurately performed.

In addition, in the above-described configuration, the second threshold value may be set for each of the seat rows.

According to the above-described configuration, the second threshold value can be optimized based on a positional relationship between a sensor and each seat row, etc., by which the accuracy of detection of an occupant can be improved.

In addition, a program which is another embodiment of the present invention causes a computer to perform: a process of obtaining reflected-wave information indicating intensities of reflected waves generated by transmission waves being reflected by objects, the transmission waves being transmitted into an interior of a mobile unit; a process of generating, based on the reflected-wave information, a piece of first point cloud information indicating changes in intensity of corresponding ones of the reflected waves in a first detection region set for each seat row including a plurality of seating regions; and a process of determining, for each of the seat rows, whether or not an occupant is present in a corresponding one of the first detection regions, based on a corresponding one of the pieces of first point cloud information, when driving of the mobile unit is stopped, and the pieces of first point cloud information each include information indicating a point cloud corresponding to an object present across the plurality of seating regions in a corresponding one of the first detection regions.

### BRIEF DESCRIPTION OF DRAWINGS

FIG. 1 is a side view showing an example of a configuration of a vehicle interior of a vehicle having an occupant detection device of an embodiment mounted thereon.
FIG. 2 is a block diagram showing an example of a functional configuration of the occupant detection device of the embodiment.
FIG. 3 is a diagram showing an example of reflected-wave information of a reflected wave from a human being in the embodiment.
FIG. 4 is a diagram showing an example of reflected-wave information of a reflected wave from a non-living body in the embodiment.
FIG. 5 is a front view showing an example of a first detection region corresponding to a second seat row of the embodiment.
FIG. 6 is a top view showing an example of the first detection region corresponding to the second seat row and a first detection region corresponding to a third seat row of the embodiment.
FIG. 7 is a front view showing an example of a situation in which an occupant is present in the second seat row in the embodiment.
FIG. 8 is a diagram showing an example of first point cloud information of the embodiment.
FIG. 9 is a flowchart showing an example of a process performed by the occupant detection device of the embodiment.

### DESCRIPTION OF EMBODIMENTS

An illustrative embodiment of the present invention is disclosed below. Configurations in the embodiment shown below and functions, results, and effects that are brought about by the configurations are an example. The present invention can also be implemented by other configurations than those disclosed in the following embodiment, and at least one of various effects based on a basic configuration and derivative effects can be obtained.

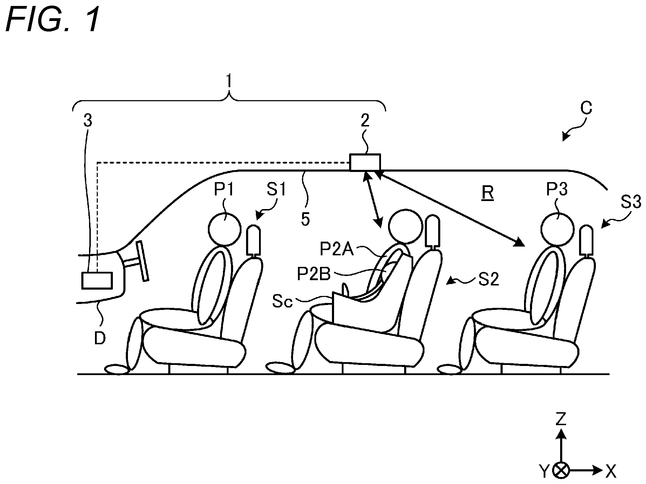

FIG. 1 is a side view showing an example of a configuration of a vehicle interior R of a vehicle C having an occupant detection device 1 of the embodiment mounted thereon. In the drawing, an X-direction corresponds to a direction going from the front toward the rear of the vehicle C, a Y-direction corresponds to a direction going from the left side toward the right side of the vehicle C, and a Z-axis corresponds to a direction going from the bottom toward the top of the vehicle C.

The vehicle C is an example of a mobile unit and can be, for example, an automobile that uses an internal combustion engine, a motor, or both (hybrid mechanism) as a drive source. The vehicle C of the present embodiment is a so-called three-row seat vehicle and has a first seat row S1, a second seat row S2, and a third seat row S3. FIG. 1 illustrates a state in which an occupant P1 is seated on the left side (passenger seat) of the first seat row S1, an occupant P2A is seated on the right side of the second seat row S2, an occupant P2B is seated in a child car seat Sc installed on the left side of the second seat row S2, and an occupant P3 is seated in the third seat row S3.

The occupant detection device 1 is a device that detects an occupant present in the vehicle interior R. In the present embodiment, the occupant detection device 1 that detects an occupant present further back from the first seat row S1, i.e., in the second seat row S2 or the third seat row S3, will be described.

The occupant detection device 1 includes a sensor 2 and a control device 3. The sensor 2 is installed on a ceiling 5 of the vehicle C, and transmits transmission waves into the vehicle interior R and receives reflected waves that are generated by the transmission waves being reflected by objects in the vehicle interior R. The sensor 2 of the present embodiment is disposed above the second seat row S2. The control device 3 is installed in a dashboard D and is connected to the sensor 2 through a network such as a controller area network (CAN). Note that the installation locations of the sensor 2 and the control device 3 are not limited thereto. Note also that a plurality of sensors 2 may be installed.

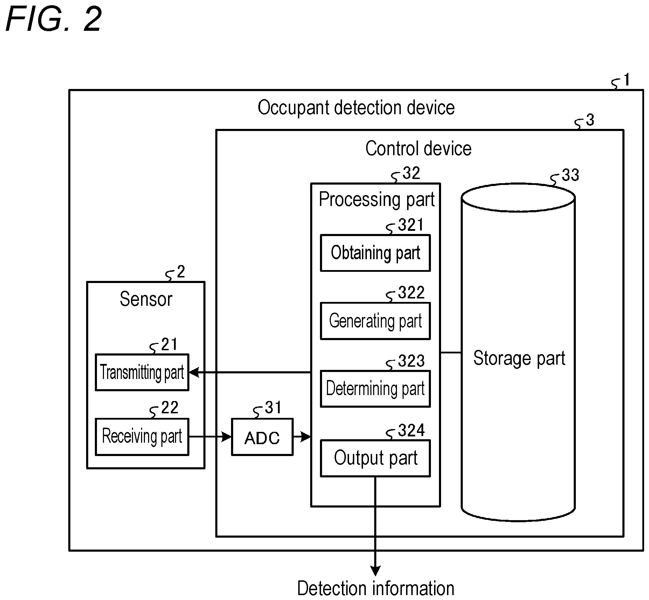

FIG. 2 is a block diagram showing an example of a functional configuration of the occupant detection device 1 of the embodiment. The sensor 2 includes a transmitting part 21 and a receiving part 22.

The transmitting part 21 transmits (radiates), as transmission waves, electromagnetic waves with a predetermined frequency (e.g., 60 GHz to 65 GHz) into the vehicle interior R. The receiving part 22 receives reflected waves that are generated by the transmission waves being reflected by objects present in the vehicle interior R, and generates electrical signals (analog signals) indicating the intensities of the reflected waves.

The control device 3 includes, for example, a micro controller unit (MCU) including an integrated circuit having a hardware processor, a memory, etc., mounted thereon. The control device 3 includes an analog-to-digital converter (ADC) 31, a processing part 32, and a storage part 33.

The ADC 31 converts the analog signals obtained by the receiving part 22 of the sensor 2 into digital signals and outputs the digital signals to the processing part 32. The processing part 32 is formed using, for example, a hardware processor such as a central processing unit (CPU). The storage part 33 is formed using, for example, a storage device such as a random access memory (RAM), a read only memory (ROM), a solid state drive (SSD), and a hard disk drive (HDD). The storage part 33 stores a program executed by the processing part 32, data required to execute the program, data generated by execution of the program, etc.

The processing part 32 performs various types of arithmetic processing and control processes for implementing functions of the occupant detection device 1, based on a program, setting data, threshold value data, etc., stored in the storage part 33. The processing part 32 of the present embodiment includes an obtaining part 321, a generating part 322, a determining part 323, and an output part 324. Note that some or all of these functional parts 321 to 324 may be formed using dedicated hardware (a circuit, etc.) such as an application specific integrated circuit (ASIC) or a field-programmable gate array (FPGA).

The obtaining part 321 obtains reflected-wave information indicating the intensities of the reflected waves received by the receiving part 22 of the sensor 2. The reflected-wave information includes information indicating time-series changes in the intensity of the reflected wave at each location (e.g., each voxel in a voxelmap) in the vehicle interior R, etc.

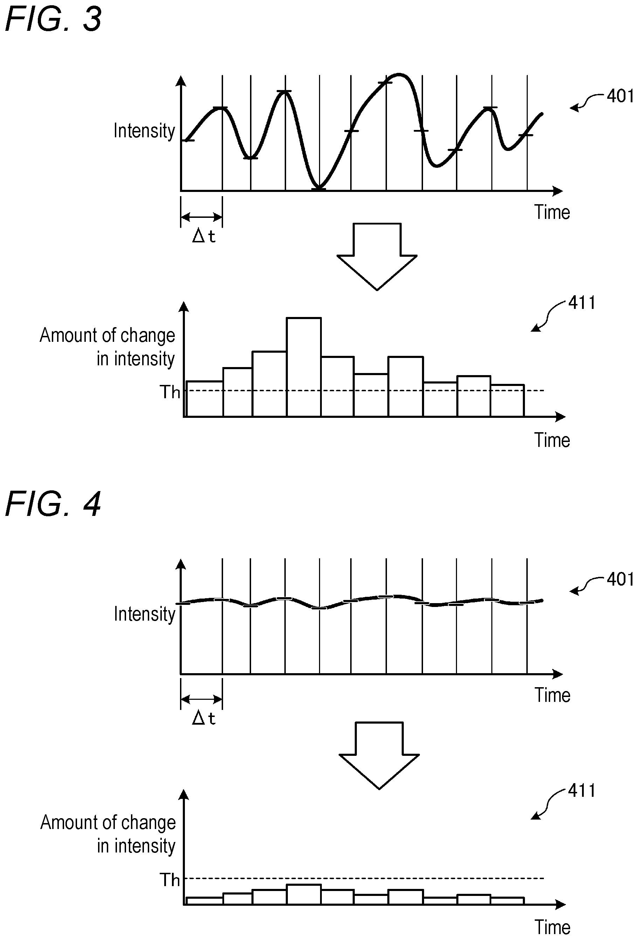

FIG. 3 is a diagram showing an example of reflected-wave information of a reflected wave from a human being in the embodiment. FIG. 4 is a diagram showing an example of reflected-wave information of a reflected wave from a non-living body in the embodiment.

Each of FIGS. 3 and 4 illustrates a relationship between intensity information 401 indicating time-series changes in the intensity of the reflected wave and amount-of-change-in-intensity information 411 indicating time-series changes in the amount of change in the intensity of the reflected wave. A horizontal axis of the intensity information 401 represents the elapsed time from transmission of a transmission wave, and a vertical axis represents the intensity of the reflected wave at a given location (e.g., one voxel) in the vehicle interior R. Δt indicates a predetermined unit time. A horizontal axis of the amount-of-change-in-intensity information 411 represents the elapsed time from transmission of the transmission wave, and a vertical axis represents the amount of change per unit time Δt in the intensity of the reflected wave at the given location in the vehicle interior R. Th indicates a predetermined first threshold value.

When the source of reflection of the reflected wave is a part (e.g., the chest) of a human being, due to motion unique to the human being such as pulsation or human motion, the amount of change per unit time Δt in the intensity of the reflected wave is large compared to a case in which the source of reflection is a non-living body such as baggage. Hence, when the source of reflection is a human being, as indicated by the amount-of-change-in-intensity information 411 of FIG. 3, the amount of change in intensity per unit time Δt is greater than or equal to the first threshold value Th. On the other hand, when the source of reflection of the reflected wave is a non-living body, as indicated by the amount-of-change-in-intensity information 411 of FIG. 4, the amount of change in intensity per unit time Δt is smaller than the first threshold value Th.

The generating part 322 (see FIG. 2) generates, based on the reflected-wave information obtained by the obtaining part 321, first point cloud information indicating changes in the intensity of reflected waves in a first detection region which is set for each seat row including a plurality of seating regions. The first detection region is set for each seat row (in the present embodiment, the second seat row S2 and the third seat row S3) which is a target for detection of an occupant. For example, a first detection region corresponding to a seat row with a seating capacity of three is set such that the first detection region includes three seating regions, i.e., such that the entire or substantially the entire seat row serves as one detection target.

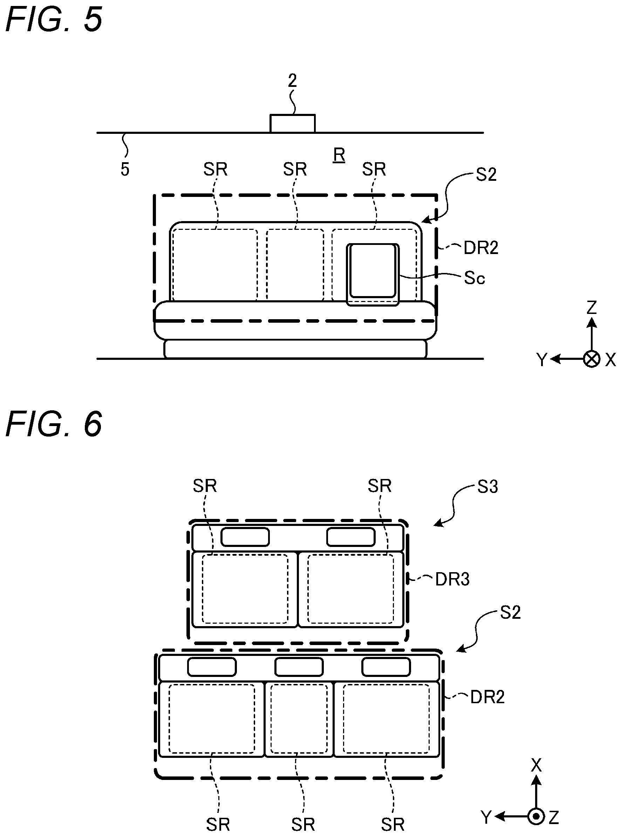

FIG. 5 is a front view showing an example of a first detection region DR2 corresponding to the second seat row S2 of the embodiment. FIG. 6 is a top view showing an example of the first detection region DR2 corresponding to the second seat row S2 and a first detection region DR3 corresponding to the third seat row S3 of the embodiment.

As shown in FIGS. 5 and 6, the first detection region DR2 corresponding to the second seat row S2 is set so as to include three seating regions SR which are set on the second seat row S2, and is set separately from the first detection region DR3 corresponding to the third seat row S3. As shown in FIG. 6, the first detection region DR3 corresponding to the third seat row S3 is set so as to include two seating regions SR which are set on the third seat row S3, and is set separately from the first detection region DR2 corresponding to the second seat row S2. By setting such first detection regions DR2 and DR3, regardless of the seating regions SR, the entire or substantially the entire seat row S2 or S3 can be treated as one detection region.

The first detection regions DR2 and DR3 such as those described above are used to detect an occupant at the time of the vehicle C being stopped. The time of being stopped refers to, for example, the time when a function for preventing leaving behind of an occupant (a young child, etc.), an animal, baggage, etc., in the vehicle interior R, e.g., child presence alert (CPA) or rear seat reminder (RSR), is in operation and can be specifically, for example, when a gearshift is in parking position or when an ignition switch has been turned off.

The generating part 322 (see FIG. 2) generates, based on the above-described reflected-wave information (see FIGS. 3 and 4), pieces of first point cloud information indicating changes in the intensity of reflected waves in the first detection regions DR2 and DR3 which are set for the respective seat rows S2 and S3 as described above. The first point cloud information can be, for example, information including the number of plots indicating the number of unit regions (e.g., voxels) in which the amount of change per unit time Δt in the intensity of the reflected wave is greater than or equal to the first threshold value Th among a plurality of unit regions that mark off each of the first detection regions DR2 and DR3.

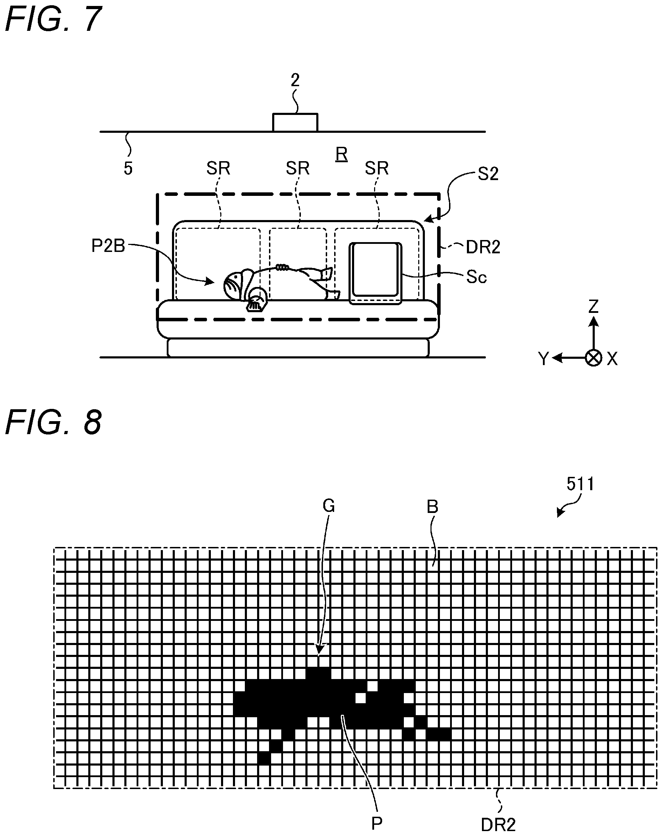

FIG. 7 is a front view showing an example of a situation in which the occupant P2B is present in the second seat row S2 in the embodiment. FIG. 8 is a diagram showing an example of first point cloud information 511 of the embodiment.

FIG. 7 illustrates a situation in which the occupant P2B which is a young child is lying across a plurality of seating regions SR on the second seat row S2. FIG. 8 illustrates first point cloud information 511 corresponding to the situation shown in FIG. 7. The first point cloud information 511 includes information indicating a point cloud G corresponding to an object (in this example, the occupant P2B) present across a plurality of seating regions SR. The first point cloud information 511 is information having, as plots P, voxels B (an example of unit regions) in which the amount of change per unit time Δt in the intensity of a reflected wave is greater than or equal to the first threshold value Th among a plurality of voxels B that mark off the first detection region DR2. By generating such first point cloud information 511, motion unique to a human being (pulsation, human motion, etc.) can be captured as a point cloud G including a plurality of plots P.

The determining part 323 (see FIG. 2) determines, for each of the seat rows S2 and S3, whether or not an occupant is present at the time of the vehicle C being stopped, based on the pieces of first point cloud information 511 generated by the generating part 322. For example, when the number of plots P (the number of plots) included in the first point cloud information 511 is greater than or equal to a predetermined second threshold value, the determining part 323 determines that an occupant (e.g., the occupant P2B which is a young child) is present in a seat row (e.g., the second seat row S2) which is a detection target. For example, when the number of plots P included in the point cloud G included in the first point cloud information 511 is greater than or equal to 10 (an example of the second threshold value), it is determined that an occupant is present in the second seat row S2. By such a determination method, even when an occupant is present across a plurality of seating regions SR, the presence or absence of an occupant can be accurately detected for each seat row.

The second threshold value of the present embodiment is set for each of the seat rows S2 and S3. The second threshold value is set based on a positional relationship between the sensor 2 and each of the seat rows S2 and S3, etc. For example, it is preferred that the second threshold value be set to be lower for a location where it is easier to detect motion unique to a human being (living body) (e.g., pulsation). In the present embodiment, from a positional relationship between the sensor 2 and each of the seat rows S2 and S3, pulsation in the chests of the occupants P2A and P2B seated in the second seat row S2 is more difficult to be detected than pulsation in the chest of the occupant P3 seated in the third seat row S3. Hence, in the present embodiment, the second threshold value for the second seat row S2 (first detection region DR2) is set to be a smaller value than the second threshold value for the third seat row S3 (first detection region DR3). By this, the accuracy of detection of an occupant can be improved.

The output part 324 outputs results of the determination made by the determining part 323, i.e., detection information indicating that an occupant is present in the vehicle interior R, to a predetermined system. The predetermined system can be, for example, an ECU that performs a process for implementing a leaving-behind prevention function (e.g., CPA or RSR) for preventing leaving behind of an occupant, an animal, baggage, etc., at the time of the vehicle C being stopped.

By functions such as those described above, detection of an occupant at the time of the vehicle C being stopped is highly accurately performed, which in turns makes it possible to highly accurately perform the leaving-behind prevention function, etc.

In addition, the occupant detection device 1 of the present embodiment detects an occupant at the time of the vehicle C being driven, using second detection regions that are different from the first detection regions DR2 and DR3 used at the time of being stopped such as those described above. Note that the time of being driven refers to a state other than the above-described time of being stopped, and can be, for example, the time of the vehicle C traveling (including the time of being temporarily stopped).

The second detection regions used at the time of the vehicle C being driven can be set as appropriate, using a publicly known or new technique. The second detection region can be, for example, a region set for each seating region SR. In this case, the generating part 322 generates second point cloud information indicating changes in the intensity of reflected waves in a second detection region set for each seating region SR, and the determining part 323 detects, for each seating region SR, an occupant at the time of the vehicle C being driven, based on the second point cloud information. At this time, the second point cloud information can be generated by the same technique as that used for the above-described first point cloud information 511.

As described above, by using different detection regions for the time of the vehicle C being stopped and the time of the vehicle C being driven, it becomes possible to highly accurately perform both a function used at the time of being stopped (e.g., the leaving-behind prevention function) and a function used at the time of being driven (e.g., an occupant monitoring function). Note that the function used at the time of being driven (occupant monitoring function) can include, for example, a function of obtaining biological information such as pulsation of an occupant and a function of estimating occupant's posture.

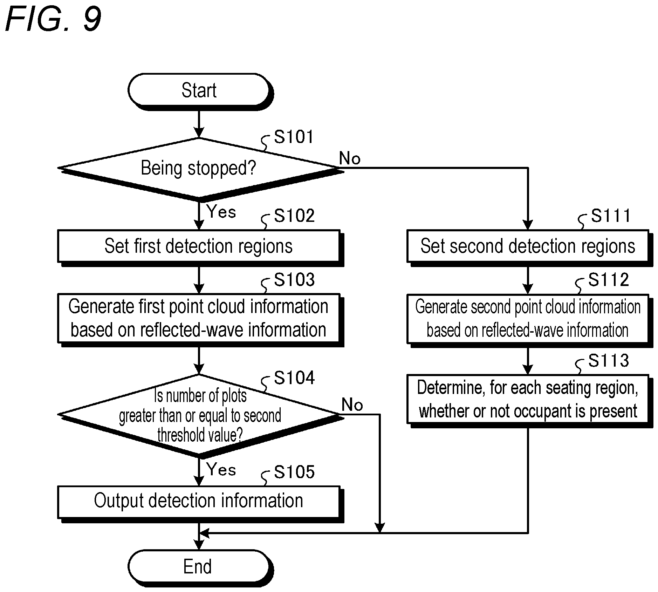

FIG. 9 is a flowchart showing an example of a process performed by the occupant detection device 1 of the embodiment. The generating part 322 determines whether or not the vehicle C is in a state of being stopped (being stopped) (S101). If the vehicle C is being stopped (S101: Yes), then the generating part 322 sets first detection regions DR2 and DR3 (S102) and generates pieces of first point cloud information 511, based on reflected-wave information obtained by the obtaining part 321 (S103). Thereafter, the determining part 323 determines, based on each of the pieces of first point cloud information 511, whether or not the number of plots is greater than or equal to the second threshold value (S104). If the number of plots is greater than or equal to the second threshold value (S104: Yes), then the determining part 323 determines that an occupant is present in a seat row corresponding to the first point cloud information 511, and the output part 324 outputs detection information indicating that an occupant is present, to a predetermined system (S105). If the number of plots is not greater than or equal to the second threshold value (S104: No), then the determining part 323 determines that an occupant is not present in the seat row, and thus does not output detection information.

If the vehicle C is not in a state of being stopped (being driven) (S101: No), then the generating part 322 sets second detection regions (S111) and generates pieces of second point cloud information, based on reflected-wave information obtained by the obtaining part 321 (S112). Thereafter, the determining part 323 determines, for each seating region SR, whether or not an occupant is present, based on the pieces of second point cloud information (S113), and results of the determination are used in a process for performing a function used at the time of being driven.

As described above, according to the present embodiment, detection of an occupant at the time of a vehicle being stopped is performed based on a first detection region set for each seat row. By this, it becomes possible to highly accurately detect the presence or absence of an occupant at the time of being stopped, regardless of the occupant's location or posture, making it possible to highly accurately perform the leaving-behind prevention function, etc.

Note that although, in the above-described embodiment, the occupant detection device 1 is described that detects an occupant present in the second seat row S2 or the third seat row S3 in a three-row seat vehicle, the configuration of the occupant detection device 1 is not limited thereto. The occupant detection device 1 may detect, for example, an occupant present in the first seat row S1 (a driver's seat or a passenger seat). In this case, it is preferred to install the sensor 2 on an upper part of a windshield, etc. In addition, the occupant detection device 1 may be mounted on a vehicle that does not have the third seat row S3, a vehicle having one or more seat rows further back from the third seat row S3, etc.

A program that causes a computer (control device 3) to perform a process for implementing the functions of the occupant detection device 1 of the above-described embodiment may be stored in a file in installable or executable format and in a computer-readable storage medium, such as a CD-ROM, a CD-R, a memory card, a digital versatile disk (DVD), or a flexible disk (FD), and provided as a computer program product. In addition, the program may be stored on a computer connected to a network such as the Internet, and provided by being downloaded via the network. In addition, the program may be provided or distributed via a network such as the Internet.

Although the embodiment of the present invention has been described above, the above-described embodiment is presented as an example and is not intended to limit the scope of the invention. The new embodiment can be implemented in various other modes, and various omissions, substitutions, or changes can be made thereto without departing from the spirit of the invention. The embodiment and variants thereof are included in the scope and spirit of the invention and included in inventions described in the claims and in the range of equivalency thereof.

### REFERENCE SIGNS LIST

1: Occupant detection device, 2: Sensor, 3: Control device, 5: Ceiling, 21: Transmitting part, 22: Receiving part, 31: ADC, 32: Processing part, 33: Storage part, 321: Obtaining part, 322: Generating part, 323: Determining part, 324: Output part, 401: Intensity information, 411: Amount-of-change-in-intensity information, 511: First point cloud information, B: Voxel, C: Vehicle, D: Dashboard, DR2, DR3: First detection region, G: Point cloud, R: Vehicle interior, P: Plot, P1, P2A, P2B, P3: Occupant, S1: First seat row, S2: Second seat row, S3: Third seat row, Sc: Child car seat, SR: Seating region, Th: First threshold value, and Δt: Unit time

## Claims

1. An occupant detection device comprising:
an obtaining part that obtains reflected-wave information indicating intensities of reflected waves generated by transmission waves being reflected by objects, the transmission waves being transmitted into an interior of a mobile unit;
a generating part that generates, based on the reflected-wave information, a piece of first point cloud information indicating changes in intensity of corresponding ones of the reflected waves in a first detection region set for each seat row including a plurality of seating regions; and
a determining part that determines, for each of the seat rows, whether or not an occupant is present in a corresponding one of the first detection regions, based on a corresponding one of the pieces of first point cloud information, when driving of the mobile unit is stopped,
wherein
the pieces of first point cloud information each include information indicating a point cloud corresponding to an object present across the plurality of seating regions in a corresponding one of the first detection regions.

2. The occupant detection device according to claim 1, wherein
the generating part generates the first point cloud information including a number of plots indicating a number of unit regions in which an amount of change per unit time in intensity of the reflected wave is greater than or equal to a first threshold value among a plurality of unit regions that mark off the first detection region, and
the determining part determines that an occupant is present, when the number of plots is greater than or equal to a second threshold value.

3. The occupant detection device according to claim 2, wherein the second threshold value is set for each of the seat rows.

4. The occupant detection device according to claim 1, wherein
at a time of being driven, the generating part generates second point cloud information indicating changes in intensity of corresponding ones of the reflected waves in a second detection region different from the first detection regions, the time of being driven including a time of traveling or a time of being temporarily stopped, and being other than when driving of the mobile unit is stopped, and
the determining part determines, based on the second point cloud information, whether or not an occupant is present at the time of the mobile unit being driven.

5. The occupant detection device according to claim 4, wherein the second detection region is set for each of the seating regions.

6. A program that causes a computer to perform:
a process of obtaining reflected-wave information indicating intensities of reflected waves generated by transmission waves being reflected by objects, the transmission waves being transmitted into an interior of a mobile unit;
a process of generating, based on the reflected-wave information, a piece of first point cloud information indicating changes in intensity of corresponding ones of the reflected waves in a first detection region set for each seat row including a plurality of seating regions; and
a process of determining, for each of the seat rows, whether or not an occupant is present in a corresponding one of the first detection regions, based on a corresponding one of the pieces of first point cloud information, when driving of the mobile unit is stopped,
wherein
the pieces of first point cloud information each include information indicating a point cloud corresponding to an object present across the plurality of seating regions in a corresponding one of the first detection regions.
